# EUROPEAN PATENT APPLICATION

(11) **EP 3 654 739 A1**
(43) Date of publication of application: **20.05.2020**
(21) Application number: 18832597.1
(22) Date of filing: 14.06.2018
(51) Int. Cl.: H05H 1/30, G01N 21/73, G01N 27/62, H01J 49/10

(54) **PLASMA GENERATING DEVICE, LIGHT EMISSION ANALYSIS DEVICE AND MASS ANALYSIS DEVICE COMPRISING SAID PLASMA GENERATING DEVICE, AND DEVICE STATUS EVALUATION METHOD**

(30) Priority: 13.07.2017 JP 2017136729
(71) Applicant: Shimadzu Corporation, Kyoto-shi, Kyoto 604-8511 (JP)
(72) Inventor: INA, Kenichi, Kyoto-shi Kyoto 604-8511 (JP)
(74) Representative: Müller-Boré & Partner Patentanwälte PartG mbB
(86) International application number: PCT/JP2018/022680
(87) International publication number: WO 2019/012906

(57) **Abstract**

A high-frequency power supply unit (2) supplies high-frequency power to an induction coil. A status determination processing unit (81) determines a status of a plasma generator based on a change in a frequency of the high-frequency power supplied to the induction coil by the high-frequency power supply unit (2). By determining the status of the plasma generator based on the change in the frequency of the high-frequency power supplied to the induction coil, it is possible to more accurately determine the status of the device based on stable determination criteria.

## Description

### TECHNICAL FIELD

The present invention relates to a plasma generator for generating plasma, a light emission analysis device and a mass spectrometer equipped with the plasma generator, and a device status determination method for determining a device status.

### BACKGROUND TECHNIQUE

For example, an analyzer, such as, e.g., an ICP (Inductively Coupled Plasma) light emission analysis device and an ICP mass spectrometer, employs a configuration in which plasma is generated in a plasma torch by supplying high-frequency power to an induction coil (for example, see the following Patent Document 1). In an ICP light emission analysis device, a sample to be measured is atomized and ejected into plasma together with a carrier gas. As a result, the components in the sample are excited to emit light. By dividing the light generated at this time by a diffraction grating and detecting it by a photodetector, it is possible to obtain an emission spectrum peculiar to the components in the sample. Further, in an ICP mass spectrometer, a plasma torch is provided in an ionization unit of the ICP mass spectrometer, and ions generated by plasma discharging can be separated for each mass to obtain a mass spectrum.

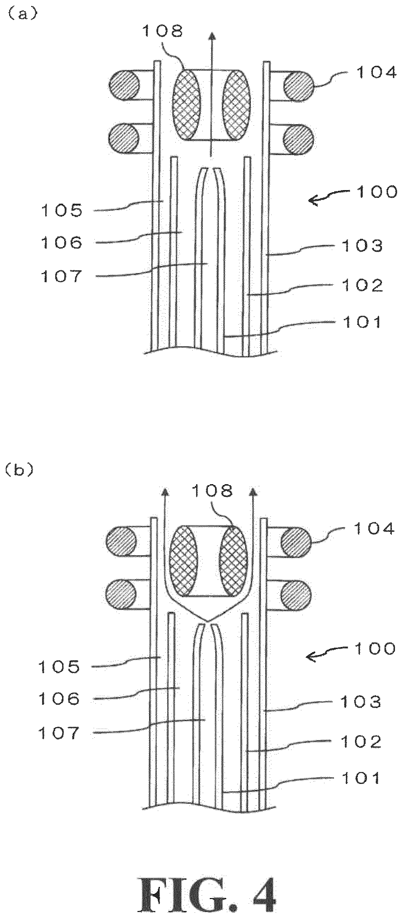

FIG. 4 is a cross-sectional view showing a schematic configuration of a plasma torch 100. The plasma torch 100 is provided with a sample supply pipe 101, an auxiliary gas supply pipe 102, and a plasma gas supply pipe 103. These supply pipes 101, 102, and 103 are arranged concentrically, and the outside of the sample supply pipe 101 is covered with the auxiliary gas supply pipe 102 with a space therebetween, and the outside of the auxiliary gas supply pipe 102 is covered with the plasma gas supply pipe 103 with a space therebetween. The tip end portion of the plasma gas supply pipe 103 is inserted into a wound induction coil 104.

The cylindrical space between the auxiliary gas supply pipe 102 and the plasma gas supply pipe 103 constitutes a plasma gas flow path 105. A plasma gas composed of, for example, an argon gas is introduced into the plasma gas flow path 105. The plasma gas spirally moves in the plasma gas flow path 105 toward the tip end of the plasma torch 100 and is ionized by the high-frequency electromagnetic field formed by the induction coil 104 to generate plasma 108. The plasma 108 generated at this time has a cylindrical shape (donut shape).

The cylindrical space between the sample supply pipe 101 and the auxiliary gas supply pipe 102 constitutes an auxiliary gas flow path 106. An auxiliary gas composed of, for example, an argon gas is introduced into the auxiliary gas flow path 106. The auxiliary gas moves in the auxiliary gas flow path 106 toward the tip end side of the plasma torch 100 and is ejected into the plasma 108. By adjusting the flow rate of the auxiliary gas, the position of the plasma 108 can be controlled.

The inner space of the sample supply pipe 101 constitutes a sample flow path 107. The sample to be measured is atomized into an atomized sample and then introduced into the sample flow path 107 together with a carrier gas composed of, for example, an argon gas. The sample (atomized sample) moves in the sample flow path 107 toward the tip end side of the plasma torch 100 and is ejected to the inside of the cylindrical plasma 108.

As shown in (a) of FIG. 4, the sample straightly passes through the inside of the cylindrical plasma 108, and in the process, the components in the sample come into contact with the plasma 108, causing excitation light emission.

### PRIOR ART DOCUMENT

### PATENT DOCUMENT

Patent Document 1: Japanese Unexamined Patent Application Publication No. 2008-202990
Patent Document 2: Japanese Unexamined Patent Application Publication No. 2014-107012

### SUMMARY OF THE INVENTION

### Problems to be Solved by the Invention

However, the sample sometimes flows in unintended directions due to various causes such as individual differences in the plasma torch 100 and variations in the position of the induction coil 104. For example, as shown in (b) of FIG. 4, the sample sometimes passes through the outside of the plasma 108. In this case, the components in the sample will not be excited to emit light, and therefore a problem, such as a decrease in sensitivity, occurs.

At present, whether or not the sample is correctly introduced into the inside of the plasma 108 must be determined by visually checking the status of the plasma 108 by an operator. For this reason, the determination is made based on unstable criteria on the basis of an experience of an operator, and an accurate determination may not be possible in some cases. Further, other than the case in which a sample is not correctly introduced to the inside of the plasma 108, there is a case in which a sample is not flowing due to, for example, clogging and there also is a case in which the status of the plasma 108 changes due to various causes such as aging of the plasma torch 100 and variations in devices and components.

The present invention has been made in view of the above circumstances, and an object of the present invention is to provide a plasma generator capable of more accurately determining a status of a plasma generator, a light emission analysis device and a mass spectrometer equipped with the plasma generator, and a device status determination method.

### Means for Solving the Problem

A plasma generator according to the present invention is a plasma generator for generating plasma and is provided with a plasma torch, a high-frequency power supply unit, and a status determination processing unit. In the plasma torch, an electromagnetic field is formed by an induction coil, cylindrical plasma is formed in the electromagnetic field, and an atomized sample is supplied toward an inside of the plasma by a carrier gas. The high-frequency power supply unit supplies high-frequency power to the induction coil. The status determination processing unit determines the status of the plasma generator based on a change in a frequency of the high-frequency power supplied to the induction coil by the high-frequency power supply unit.

According to such a configuration, it is possible to determine the status of the plasma generator based on the change in the frequency of the high-frequency power supplied to the induction coil. Therefore, unlike a conventional method in which an operator visually confirms the status of the plasma, the status of the device can be more accurately determined based on stable criteria.

The plasma generator may be further provided with a carrier gas flow rate control unit configured to control a flow rate of the carrier gas. In this instance, the status determination processing unit may determine the status of the plasma generator based on the change in the frequency of the high-frequency power caused by a change in the flow rate of the carrier gas.

According to such a configuration, it is possible to more accurately determine the status of the device on the basis of the change in the frequency of the high-frequency power caused by the change in the flow rate of the carrier gas. Since the frequency of the high-frequency power decreases as the flow rate of the carrier gas increases, it is possible to accurately determine the status of the device by using the characteristic.

The status determination processing unit may determine the status of the plasma generator by comparing the frequency of the high-frequency power with a threshold when the flow rate of the carrier gas has reached a predetermined value.

According to such a configuration, since the frequency of the high-frequency power when the flow rate of the carrier gas has reached a predetermined value can be predicted by utilizing the characteristic that the frequency of the high-frequency power decreases when the flow rate of the carrier gas increases, the status of the device can be accurately determined by comparing the threshold determined based on the predicted frequency with the value of the actual frequency.

The carrier gas flow rate control unit may control the flow rate of the carrier gas based on the determination result by the status determination processing unit.

According to such a configuration, by controlling the flow rate of the carrier gas based on the determination result by the status determination processing unit, it is possible to adjust the amount of the sample to be supplied together with the carrier gas toward the inside of the plasma. For example, when it is determined that the sample is not correctly introduced into the inside of the plasma, the amount of the sample to be supplied toward the inside of the plasma is increased by increasing the flow rate of the carrier gas, so that the components in the sample can be excited to emit light well, and the sensitivity can be prevented from decreasing.

The plasma generator may further include an auxiliary gas flow rate control unit configured to control the flow rate of an auxiliary gas for controlling the position of the plasma. In this case, the auxiliary gas flow rate control unit may control the flow rate of the auxiliary gas based on the determination result by the status determination processing unit.

According to such a configuration, the position of the plasma can be adjusted by controlling the flow rate of the auxiliary gas based on the determination result by the status determination processing unit. For example, in cases where it is determined that the sample is not correctly introduced into the plasma, the components in the sample can be excited to emit light well and the sensitivity can be prevented from decreasing by decreasing the flow rate of the auxiliary gas and making the position of the plasma closer to the inside of the plasma torch.

The light emission analysis device according to the present invention includes the plasma generator, and detects and analyzes the light emitted from plasma in the plasma generator.

The mass spectrometer according to the present invention includes the plasma generator and performs an analysis using ions generated by plasma in the plasma generator.

The device status determination method is a method of determining a status of a plasma generator in which an electromagnetic field is formed by an induction coil, a cylindrical plasma is formed in the electromagnetic field, and a plasma torch for generating the plasma is used to determine a status of the plasma generator for generating the plasma using a plasma torch in which an atomized sample is supplied to an inner side of the plasma by a carrier gas, the method includes a high-frequency power supply step and a status determination step. In the high-frequency power supply step, high-frequency power is supplied to the induction coil. In the status determination step, the status of the plasma generator is determined based on a change in the frequency of the high-frequency power supplied to the induction coil by the high-frequency power supply step.

### Effects of the Invention

According to the present invention, by determining the status of the plasma generator based on the change in the frequency of the high-frequency power supplied to the induction coil, it is possible to more accurately determine the status of the device based on stable determination criteria.

### BRIEF DESCRIPTION OF THE DRAWINGS

FIG. 1 is a schematic diagram showing a configuration example of a light emission analysis device equipped with a plasma generator according to an embodiment of the present invention.
FIG. 2 is a block diagram showing an electrical configuration of the light emission analysis device of FIG. 1.
FIG. 3 is a diagram showing an example of a relationship between a flow rate of a carrier gas and a plasma frequency.
FIG. 4 is a cross-sectional view showing a schematic configuration of a plasma torch.

### EMBODIMENTS FOR CARRYING OUT THE INVENTION

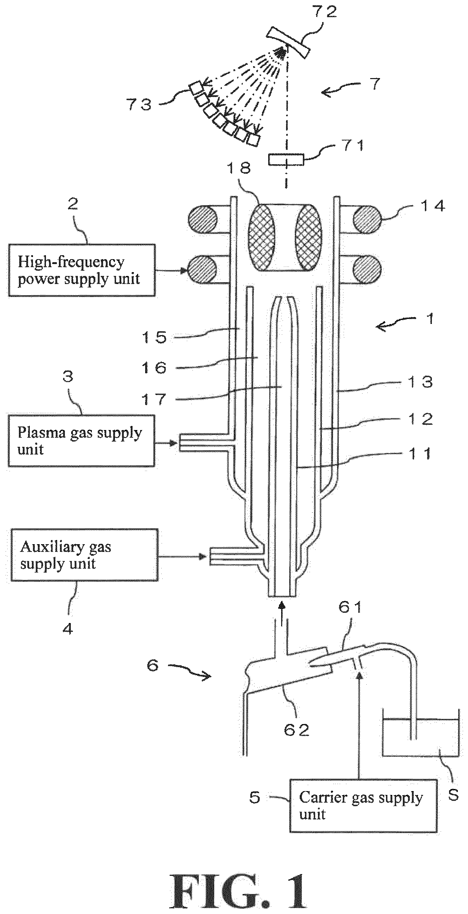

FIG. 1 is a schematic diagram showing a configuration example of a light emission analysis device equipped with a plasma generator according to an embodiment of the present invention. The light emission analysis device is an ICP (Inductively Coupled Plasma) light emission analysis device, and is provided with a plasma torch 1, a high-frequency power supply unit 2, a plasma gas supply unit 3, an auxiliary gas supply unit 4, a carrier gas supply unit 5, an atomizing device 6, a photometric unit 7, and the like. It should be noted that the present invention is not limited to be applied to an ICP light emission analysis device, and can also be applied to other analyzers such as an IPC-mass spectrometer, and devices other than analyzers as well. When the present invention is applied to an ICP mass spectrometer, by providing a plasma torch 1 on an ionization unit of the ICP mass spectrometer, ions generated by plasma discharges can be separated for each mass to obtain a mass spectrum.

The plasma torch 1 is provided with a sample supply pipe 11, an auxiliary gas supply pipe 12, and a plasma gas supply pipe 13. These supply pipes 11, 12, and 13 are provided concentrically, and the outer side of the sample supply pipe 11 is covered by the auxiliary gas supply pipe 12 with a space therebetween, and the outer side of the auxiliary gas supply pipe 12 is covered by the plasma gas supply pipe 13 with a space therebetween. The tip end portion of the plasma gas supply pipe 13 is inserted into a wound induction coil 14. The induction coil 14 is supplied with high-frequency power from a high-frequency power supply unit 2, thereby forming a high frequency electromagnetic field inside the induction coil 14.

The cylindrical space between the auxiliary gas supply pipe 12 and the plasma gas supply pipe 13 constitutes a plasma gas flow path 15. A plasma gas composed of, for example, an argon gas is introduced into the plasma gas flow path 15. The plasma gas is supplied from the plasma gas supply unit 3 into a plasma gas flow path 15, and the plasma gas spirally moves in the plasma gas flow path 15 toward the tip end of the plasma torch 1. Then, in the tip end portion of the plasma torch 1, the plasma gases are ionized by the high-frequency electromagnetic field formed by the induction coil 14, so that the plasma 18 is generated. The plasma 18 generated at this time has a cylindrical shape (donut shape).

The cylindrical space between the sample supply pipe 11 and the auxiliary gas supply pipe 12 constitutes an auxiliary gas flow path 16. An auxiliary gas composed of, for example, an argon gas is introduced into the auxiliary gas flow path 16. The auxiliary gas is supplied from an auxiliary gas supply unit 4 into the auxiliary gas flow path 16, and the auxiliary gas moves in the auxiliary gas flow path 16 toward the tip end of the plasma torch 1. Then, in the tip end portion of the plasma torch 1, the auxiliary gas is ejected into the plasma 18. By adjusting the flow rate of the auxiliary gas, the position of the plasma 18 can be controlled.

The inner space of the sample supply pipe 11 constitutes a sample flow path 17. A sample S to be measured is atomized by an atomizing device 6 into an atomized sample, and then introduced into the sample flow path 17. The atomizing device 6 is provided with a nebulizer 61 and a spray chamber 62. A carrier gas composed of, for example, an argon gas is supplied from a carrier gas supply unit 5 to the nebulizer 61. The liquid sample S is atomized by the nebulizer 61 and introduced into the sample flow path 17 via the spray chamber 62 together with a carrier gas. Then, the atomized sample S moves in the sample flow path 17 toward the tip end side of the plasma torch 1, and is ejected to the inside of the cylindrical plasma 18.

The atomized sample S passes straight through the inside of the cylindrical plasma 18, and in the process, the components in the sample come into contact with the plasma 18, causing excitation light emission. The photometric unit 7 is configured to measure light emitted by exciting components in the sample in the plasma 18, and is provided with a condenser lens 71, a diffraction grating 72, a plurality of photodetectors 73, and the like. Light generated by the excitation light emission is incident on the condenser lens 71 from the plasma 18 along the central axis of the plasma torch 1, and is condensed on the grating surface of the diffraction grating 72. Light of the respective wavelengths dispersed by the grating surface of the grating 72 is detected by the plurality of photodetectors 73, and the sample S can be analyzed on the basis of the emission spectra obtained from the detection signals.

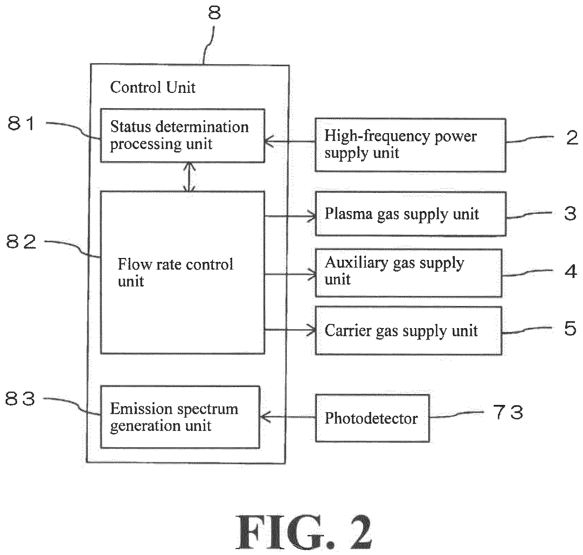

FIG. 2 is a diagram showing an electric configuration of the light emission analysis device of FIG. 1. The operation of the light emission analysis device is controlled by a control unit 8 including, for example, a CPU (Central Processing Unit). The control unit 8 functions as a status determination processing unit 81, a flow rate control unit 82, an emission spectrum generation unit 83, and the like when the CPU executes a program.

The high-frequency power supply unit 2 supplies high-frequency power to a resonant circuit including the induction coil 14 through a switching circuit (not shown) (high-frequency power supply step). Although the impedance of the induction coil 14 changes with the change in the status of the plasma 18, the frequency is automatically adjusted by automatically changing the frequency (switching frequency) of the high-frequency power supplied to the induction coil 14 by using the switching circuit so that the load impedance seen from the switching circuit side is always kept optimum.

As described above, when the status of the plasma 18 changes, the frequency of the high-frequency power (hereinafter referred to as "plasma frequency") supplied to the induction coil 14 by the high-frequency power supply unit 2 changes, so that the status of the light emission analysis device (the status of the plasma generator) can be determined based on the change in the plasma frequency. In this embodiment, the status determination processing unit 81 automatically determines the status of the light emission analysis device based on the change in the plasma frequency (status determination step).

The flow rate control unit 82 controls the operation of the plasma gas supply unit 3, the auxiliary gas supply unit 4, and the carrier gas supply unit 5. Each of the plasma gas supply unit 3, the auxiliary gas supply unit 4, and the carrier gas supply unit 5 is provided with a valve, and the flow rates of the plasma gas, the auxiliary gas, and the carrier gas can be individually controlled by adjusting the opening of the valve. That is, the flow rate control unit 82 functions as a plasma gas flow rate control unit for controlling the flow rate of the plasma gas, an auxiliary gas flow rate control unit for controlling the flow rate of the auxiliary gas, and a carrier gas flow rate control unit for controlling the flow rate of the carrier gas.

In this embodiment, it is configured such that the flow rate of the carrier gas is controlled by the flow rate control unit 82 to change the flow rate of the carrier gas and the status determination processing unit 81 determines the status of the light emission analysis device based on the change in the plasma frequency that accompanies the control. Such a determination operation is performed at a timing different from that during the analysis, for example, before the analysis. The flow rate control unit 82 controls the flow rate of the carrier gas supplied from the carrier gas supply unit 5 during the analysis or the flow rate of the auxiliary gas supplied from the auxiliary gas supply unit 4 during the analysis based on the determination result by the status determination processing unit 81.

The emission spectrum generation unit 83 generates an emission spectrum representing a relation between wavelengths and emission intensities based on the detection signals from the plurality of photodetectors 73. The generated emission spectrum may be displayed on a display unit (not shown).

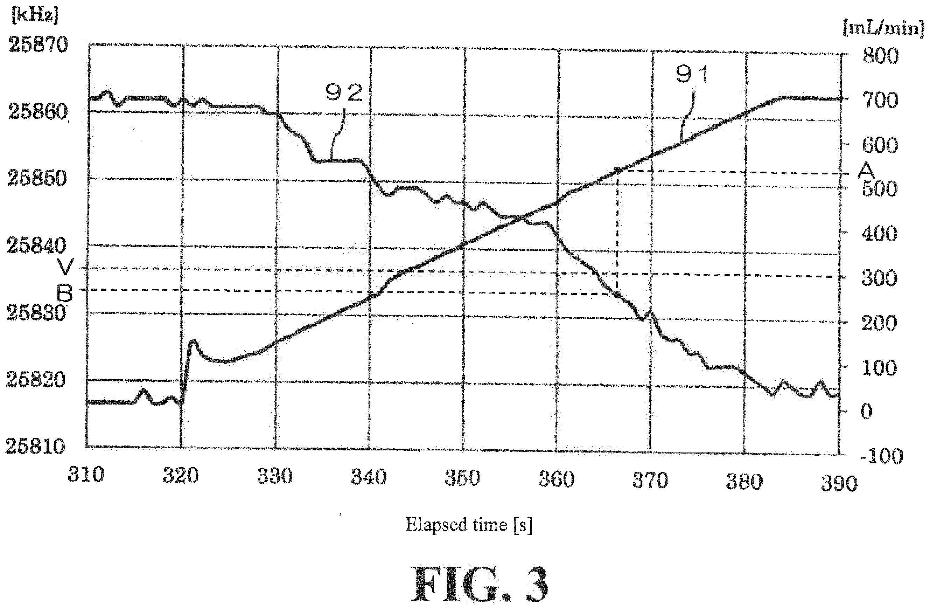

FIG. 3 is a diagram showing an example of the relationship between the flow rate of the carrier gas and the plasma frequency. In FIG. 3, the flow rate (mL/min) and the plasma frequency (kHz) of the carrier gas are shown in association with the elapsed time. As shown in FIG. 3, as the flow rate 91 of the carrier gas increases, the plasma frequency 92 generally decreases. This is because as the carrier gas increases, the sample S supplied to the plasma 18 together with the carrier gas increases, and as a result, the temperature of the plasma 18 decreases.

That is, when the temperature of the plasma 18 is lowered, the degree of ionization of the plasma gas in the plasma 18 is lowered, so that the coupling between the induction coil 14 and the plasma 18 when viewed from the high-frequency power supply unit 2 is weakened (coupling coefficient is weakened). In this manner, when the coupling between the induction coil 14 and the plasma 18 is weakened, the inductance component seen from the high-frequency power supply unit 2 side increases, and as a result, the plasma frequency 92 decreases as shown in FIG. 3.

On the other hand, in cases where the atomized sample S is not correctly introduced into the inside of the plasma 18 or in cases where the sample S is clogged in the atomizing device 6, or the like, the plasma frequency 92 does not easily decrease or does not decrease even if the flow rate 91 of the carrier gas increases. Therefore, the status of the light emission analysis device (the status of introduction of the sample S) can be determined based on the change in the plasma frequency 92 caused by the change in the flow rate 91 of the carrier gas.

As described above, in this embodiment, it is possible to determine the status of the light emission analysis device on the basis of the change in the frequency (plasma frequency 92) of the high-frequency power supplied to the induction coil 14. Therefore, unlike the conventional method in which the operator visually confirms the status of the plasma 18, it is possible to more accurately determine the status of the device based on stable criteria.

In particular, by using the relationship between the flow rate of the carrier gas and the plasma frequency as shown in FIG. 3, the status of the device can be determined more accurately with reference to the change in the plasma frequency 92 caused by the change in the flow rate 91 of the carrier gas.

For example, when the flow rate 91 of the carrier gas has reached a predetermined value A, the status determination processing unit 81 compares the value B of the plasma frequency 92 with the threshold V. The threshold V is set to a value larger than a value of the plasma frequency 92 predicted when the atomized sample S is correctly introduced into the plasma 18. Thus, when the value B is smaller than the threshold V, it is determined that the sample S is correctly introduced, and when the value B is equal to or larger than the threshold V, it is determined that the sample S is not correctly introduced. As described above, since the plasma frequency 92 when the flow rate 91 of the carrier gas has reached the predetermined value A can be predicted, the status of the device can be accurately determined by comparing the threshold V determined based on the predicted frequency with the value B of the actual plasma frequency 92.

When it is determined that the sample S is not correctly introduced, that is, when a sufficient amount of the sample S is not supplied to the inside of the plasma 18, the amount of the sample S supplied to the inside of the plasma 18 can be increased by controlling the flow rate control unit 82. Specifically, when the flow rate control unit 82 increases the flow rate of the carrier gas during the analysis (photometry), the amount of the sample S supplied to the inside of the plasma 18 increases, and the components in the sample S are excited to emit light well, thereby preventing the sensitivity from decreasing.

Further, when the flow rate control unit 82 decreases the flow rate of the auxiliary gas during the analysis, the position of the plasma 18 approaches the inside of the plasma torch 100, so that the sample S does not easily flow to the outside of the plasma 18. Also in this case, since the amount of the sample S supplied to the inside of the plasma 18 increases and the components in the sample S are excited to emit light well, it is possible to prevent the sensitivity from decreasing.

In the above embodiment, the description has been directed to the case of determining the introduction status of the sample S, such as, e.g., the case of determining whether the atomized sample S is not correctly introduced into the inside of the plasma 18 or the case of determining whether the sample S is clogged in the atomizing device 6 as the status of the light emission analysis device. However, the present invention is not limited to this, and can be applied to determine other statuses of a light emission analysis device such as aging of the plasma torch 1 and variations in devices and components from changes in plasma frequencies.

In addition, the present invention is not limited to a configuration in which the flow rate of the carrier gas or the auxiliary gas is controlled based on the determination result by the status determination processing unit 81, and various other operations can be performed. For example, based on the determination result by the status determination processing unit 81, a message indicating the status of introduction of the sample S (e.g., a message indicating that the amount of introduction of the sample S has decreased) may be displayed on the display unit, or the operation of the device may be stopped.

### DESCRIPTION OF SYMBOLS

- 1:: plasma torch
- 2:: high-frequency power supply unit
- 3:: plasma gas supply unit
- 4:: auxiliary gas supply unit
- 5:: carrier gas supply unit
- 6:: atomizing device
- 7:: photometric unit
- 8:: control unit
- 11:: sample supply pipe
- 12:: auxiliary gas supply pipe
- 13:: plasma gas supply pipe
- 14:: induction coil
- 15:: plasma gas flow path
- 16:: auxiliary gas flow path
- 17:: sample flow path
- 18:: plasma
- 61:: nebulizer
- 62:: spray chamber
- 71:: condenser lens
- 72:: diffraction grating
- 73:: photodetector
- 81:: status determination processing unit
- 82:: flow rate control unit
- 83:: emission spectrum generation unit
- 91:: flow rate of a carrier gas
- 92:: plasma frequency

## Claims

1. A plasma generator for generating plasma, comprising:
a plasma torch in which an electromagnetic field is formed by an induction coil, a cylindrical plasma is formed in the electromagnetic field, and an atomized sample is supplied toward an inside of the plasma by a carrier gas;
a high-frequency power supply unit configured to supply high-frequency power to the induction coil; and
a status determination processing unit configured to determine a status of the plasma generator based on a change in a frequency of the high-frequency power supplied to the induction coil by the high-frequency power supply unit.

2. The plasma generator as recited in claim 1,
further comprising a carrier gas flow rate control unit configured to control a flow rate of the carrier gas,
wherein the status determination processing unit determines the status of the plasma generator based on the change in the frequency of the high-frequency power caused by a change in the flow rate of the carrier gas.

3. The plasma generator as recited in claim 2,
wherein the status determination processing unit determines the status of the plasma generator by comparing the frequency of the high-frequency power with a threshold when the flow rate of the carrier gas has reached a predetermined value.

4. The plasma generator as recited in claim 2,
wherein the carrier gas flow rate control unit controls the flow rate of the carrier gas based on a determination result by the status determination processing unit.

5. The plasma generator as recited in claim 1,
further comprising an auxiliary gas flow rate control unit configured to control a flow rate of an auxiliary gas for controlling a position of the plasma,
wherein the auxiliary gas flow rate control unit controls the flow rate of the auxiliary gas based on a determination result by the status determination processing unit.

6. A light emission analysis device equipped with the plasma generator as recited in claim 1,
wherein light emitted from the plasma in the plasma generator is detected and analyzed.

7. A mass spectrometer equipped with the plasma generator as recited in claim 1,
wherein ions generated by the plasma in the plasma generator are used for an analysis.

8. A device status determination method of determining a status of a plasma generator for generating plasma using a plasma torch in which an electromagnetic field is formed by an induction coil, a cylindrical plasma is formed in the electromagnetic field, and an atomized sample is supplied to an inner side of the plasma by a carrier gas, the method comprising:
a high-frequency power supply step for supplying high-frequency power to the induction coil; and
a status determination step for determining a status of the plasma generator based on a change in a frequency of the high-frequency power supplied to the induction coil by the high-frequency power supply step.
